# EUROPÄISCHE PATENTSCHRIFT

(11) **EP 3 620 428 B1**
(45) Veröffentlichungstag und Bekanntmachung des Hinweises auf die Patenterteilung: **19.11.2025**
(21) Anmeldenummer: 19188073.1
(22) Anmeldetag: 24.07.2019
(51) Int. Cl.: B67C 3/22, F16L 27/00

(54) **MEDIENVERTEILER FÜR RUNDLÄUFERMASCHINE UND FÜLLMASCHINE**
MEDIA DISTRIBUTOR FOR ROTARY MACHINE AND FILLING MACHINE
DISTRIBUTEUR DE MILIEUX POUR UNE MACHINE ROTATIVE ET MACHINE DE REMPLISSAGE

(30) Priorität: 07.09.2018 DE 102018215227
(43) Veröffentlichungstag der Anmeldung: 11.03.2020
(73) Patentinhaber: KRONES Aktiengesellschaft, 93073 Neutraubling (DE)
(72) Erfinder: Wuerzbauer, Georg, 93073 Neutraubling (DE); Wittmann, Christopher, 93073 Neutraubling (DE)
(74) Vertreter: Grünecker Patent- und Rechtsanwälte PartG mbB

(56) Entgegenhaltungen:
- EP-A2- 2 357 151
- WO-A1-2016/138856
- CN-B- 102 756 814
- DE-A1- 1 902 049
- US-A- 3 082 795
- US-A1- 2017 276 274

## Beschreibung

### Gebiet der Erfindung

Die vorliegende Erfindung betrifft eine Vorrichtung zum Verteilen fluider Medien an eine Rundläufermaschine und eine Füllmaschine mit einem solchen Medienverteiler.

### Stand der Technik

Aus dem Stand der Technik sind eine Vielzahl von Rundläufermaschinen bekannt, bei denen eine Vielzahl von Bearbeitungsstationen auf dem Umfang einer rotierenden Maschine, beispielsweise in Form eines Karussells, angeordnet sind, welche gleiche oder unterschiedliche Bearbeitungsschritte an umlaufend mitgeführten Objekten, beispielsweise Behältern oder Preforms, durchführen.

Bei solchen Rundläufermaschinen ist es im Allgemeinen erforderlich, flüssige oder gasförmige, d.h. fluide Medien, von einem stehenden Anlagenteil zu den jeweiligen Bearbeitungsstationen zu transportieren. Dabei erfolgt die Übergabe an den rotierenden Anlagenteil wie im Stand der Technik bekannt über sogenannte Drehverteiler.

Beispielsweise ist aus dem Stand der Technik bekannt, Behälter wie Flaschen und Dosen in Getränkeabfüllanlagen mittels einer als Rundläufermaschine ausgebildeten Füllmaschine zu befüllen, bei der eine Vielzahl von Füllorganen auf dem Umfang eines Füllerkarussells angeordnet sind, welche zum Einbringen eines Füllprodukts in den jeweils zu befüllenden Behälter vorgesehen sind. Die zu befüllenden Behälter werden während des Füllvorgangs unterhalb des jeweiligen Füllorgans gehalten und laufen entsprechend zusammen mit den Füllorganen an dem Füllerkarussell um.

Um das Füllprodukt von einem stationären Anlagenteil auf den rotierenden Anlagenteil, also das Füllerkarussell, zu übergeben und um auch Betriebsmedien, wie beispielsweise Vorspanngas oder Pneumatik- bzw. Hydraulikmedien auf das Füllerkarussell zu übertragen, ist es bekannt, einen Drehverteiler vorzusehen.

Ein solcher Drehverteiler umfasst im Allgemeinen eine Verteilerwelle und ein Verteilergehäuse bzw. einen Verteilerkopf. Dabei ist entweder die Verteilerwelle oder der Verteilerkopf stationär ausgebildet, während umgekehrt der Verteilerkopf bzw. die Verteilerwelle drehbar ausgebildet ist.

Der stationär ausgebildete Teil des Drehverteilers ist über Rohrleitungen mit geeigneten Versorgungseinrichtungen für die benötigten Medien verbunden. Innerhalb des Drehverteilers sind geeignet ausgebildete Kanäle und, wenn nötig, Ventile vorgesehen, über die die zugeführten Medien an entsprechende Ausgänge des drehbar ausgebildeten Teils des Drehverteilers weitergeleitet werden. Die Ausgänge des rotierenden Teils des Drehverteilers wiederum sind über entsprechende Leitungen mit den Bearbeitungsstationen verbunden, wobei zusätzlich Ringkanäle vorgesehen sein können, um die Anzahl der benötigten Verbindungsleitungen zu reduzieren.

Aus der Offenlegungsschrift DE 10 2014 109 082 A1 der Anmelderin ist beispielsweise ein Drehverteiler bekannt, dessen Verteilerkopf drehbar ausgebildet ist, während die zugehörige Verteilerwelle stationär, d.h. nicht drehbar, ausgebildet ist. Umgekehrt ist aus der Offenlegungsschrift DE 10 2015 118 671 A1 der Anmelderin ein Drehverteiler bekannt, der ein Verteilergehäuse aufweist, das mit dem stehenden Anlagenteil fest verbunden ist, während die Verteilerwelle mit dem Füllerkarussell, also dem drehenden Anlagenteil, verbunden ist. Ein Drehverteiler bzw. eine Vorrichtung zum Verteilen fluider Medien gemäß dem Oberbegriff des Anspruchs 1 ist in der DE 19 02 049 A1 offenbart.

Neben den erwähnten Rundläuferfüllern verwenden auch andere Rundläufermaschinen, beispielsweise Sterilisationsmaschinen, Blasformmaschinen, Direktdruckmaschinen und dergleichen Drehverteiler, um die jeweils benötigten Medien an die entsprechenden Bearbeitungsstationen zu verteilen.

Aufgrund der häufig erheblichen Größe solcher Rundläufermaschinen werden zum Teil sehr lange Rohrleitungen eingesetzt, um den im Allgemeinen zentral auf, über oder unter der Rundläufermaschine angeordneten Drehverteiler mit getrennt angeordneten Einrichtungen zur Medienversorgung, beispielsweise einem Ventilknoten, zu verbinden. Dabei unterliegen die Rohrleitungen während des Betriebs der Rundläufermaschine teils erheblichen Ausdehnungen aufgrund von Temperaturschwankungen. Besonders ausgeprägt sind solche Ausdehnungen entlang der Rohrleitungen während eines Cleaning-in-Place (CIP) Vorgangs, wie er im Allgemeinen in regelmäßigen Abständen zum Reinigen der Bearbeitungsstationen durchgeführt werden muss.

Die thermischen Ausdehnungen der Rohrleitungen erzeugen dabei teils erhebliche mechanische Spannkräfte, welche nur durch möglichst exakte Anordnung der Maschinenkomponenten, insbesondere der Lage des Ventilknotens bezüglich der Rundläufermaschine, begrenzt werden können. Dadurch entsteht einerseits ein erheblicher Installationsaufwand. Andererseits können die auftretenden Kräfte bei mangelhafter Installation zu Beschädigungen an den Rohrleitungen und Anschlüssen während des Betriebs der Anlage führen.

Anordnungen von Rohrleitungen mit Drehgelenken zum Ausgleichen von thermischer Ausdehnung sind z.B. aus der US 3 082 795 A und der WO 2016/138856 A1 bekannt.

Es liegt somit der vorliegenden Erfindung die Aufgabe zugrunde, eine Vorrichtung zum Verteilen fluider Medien für eine Rundläufermaschine und eine Füllmaschine mit einem solchen Medienverteiler zur Verfügung zu stellen, die die oben beschriebenen Nachteile vermeiden. Insbesondere sollen die während des Betriebs auftretenden Kräfte auf die Rohrleitungen sowie den Drehverteiler minimiert werden und die Installation der Anlage vereinfacht werden. Die Vorrichtungen sollen insbesondere robust gegenüber Aufstellungsfehlern sein.

### Beschreibung der Erfindung

Die oben genannten Aufgaben werden gelöst durch eine Vorrichtung zum Verteilen fluider Medien für eine Rundläufermaschine, insbesondere eine Füllmaschine, gemäß Anspruch 1, mit einem Drehverteiler mit einer nicht drehbar ausgebildeten ersten Baugruppe und einer um eine Maschinendrehachse drehbar ausgebildeten zweiten Baugruppe, wobei die erste Baugruppe einen oder mehrere Anschlüsse für wenigstens ein fluides Medium aufweist, und mit einer oder mehreren Zuführleitungen für das wenigstens eine fluide Medium, die mit dem oder den Anschlüssen verbunden sind, wobei wenigstens eine Zuführleitung zwei oder mehr liegende Drehgelenke aufweist, deren Drehachsen im Wesentlichen parallel zur Maschinendrehachse angeordnet sind.

Bei Vorsehen mehrerer Zuführleitungen für verschiedene Medien kann jede Zuführleitung mit einem oder mehreren Anschlüssen verbunden sein. Beispielsweise kann für jedes Medium genau eine Zuführleitung vorgesehen sein, die mit einem oder mehreren Anschlüssen der ersten Baugruppe verbunden ist. Eine Baugruppe bezeichnet hier und im Folgenden eine Untereinheit des Drehverteilers.

Unter fluiden Medien sind hier und im Folgenden solche Medien zu verstehen, die flüssig oder gasförmig sind. Beispiele für flüssige Medien sind Füllprodukte wie Getränke sowie flüssige Sterilisations- bzw. Reinigungsmittel. Beispiele für gasförmige Medien sind Spülgase, Spanngase, sowie Steuer- oder Druckluft.

Rundläufermaschinen und Füllmaschinen sind im Stand der Technik allgemein bekannt, sodass hier auf eine detaillierte Beschreibung verzichtet wird. Insbesondere ist die Ausbildung als Rundläufermaschine in Form eines Füllerkarussells mit einer Vielzahl von Füllorganen wie in den oben erwähnten Offenlegungsschriften beschrieben bekannt. Die Vorrichtung zum Verteilen der fluiden Medien kann als Teil der Rundläufermaschine oder getrennt von ihr ausgebildet sein. Im Allgemeinen ist die drehbar ausgebildete zweite Baugruppe an dem rotierenden Anlagenteil der Rundläufermaschine angeordnet und mit diesem verbunden.

Die Maschinendrehachse wird durch die Rotationsachse der Rundläufermaschine bestimmt. Sie fällt erfindungsgemäß mit der Rotationsachse der drehbar ausgebildeten zweiten Baugruppe zusammen, da sich Rundläufermaschine und zweite Baugruppe des Drehverteilers synchron drehen. Es sei jedoch angemerkt, dass der Drehverteiler, insbesondere zusammen mit einem Teil der Rundläufermaschine, höhenverstellbar ausgebildet sein kann. Somit kann auch die nicht drehbar ausgebildete erste Baugruppe entlang der Maschinendrehachse verfahrbar, d.h. höhenverstellbar, ausgebildet sein. Alternativ kann der Drehverteiler, und insbesondere die erste Baugruppe, jedoch feststehend, d.h. auch nicht entlang der Maschinendrehachse verfahrbar ausgebildet sein.

Die eine oder mehreren Zuführleitungen stellen Fluidverbindungen für das Medium oder die Medien zwischen einer Versorgungseinheit für die Medien, beispielsweise dem weiter unten erwähnten Ventilknoten und/oder jeweiligen Speichervorrichtungen, und der ersten Baugruppe des Drehverteilers her. Dabei können die Zuführleitungen eine Vielzahl von Segmenten umfassen, die als starre oder flexible Rohrverbindungen ausgebildet sein können. Die Segmente können durch Gewinde-, Flansch- oder Schweißverbindungen miteinander verbunden sein.

Erfindungsgemäß weist jedoch wenigstens eine Zuführleitung zwei oder mehr Drehgelenke auf, wobei zumindest ein liegendes Drehgelenk aufeinanderfolgende Segmente der Zuführleitung miteinander verbindet. Dadurch können die Segmente relativ zueinander gedreht bzw. ein Segment relativ zu einem Anschluss, beispielsweise der ersten Baugruppe, gedreht werden.

Drehgelenke für Rohrverbindungen, d.h. Rohrdrehgelenke, sind im Stand der Technik allgemein bekannt. Die Drehgelenke können beispielsweise mit einer radialen Dichtung und einem Kugellager ausgebildet sein. Ein Innenteil des Drehgelenks, das beispielsweise mit einem ersten Rohrsegment verbunden ist, ist drehbar innerhalb eines Außenteils des Drehgelenks, das seinerseits beispielsweise mit einem zweiten Rohrsegment verbunden sein kann, gelagert. Dabei können die Bohrungen des Innen- und Außenteils des Drehgelenks auf einer Achse liegen oder aber einen Winkel, insbesondere einen rechten Winkel, zueinander bilden. Entsprechend können die verbundenen Segmente eine Linie bilden oder einen Winkel zueinander einschließen. Selbiges gilt auch, wenn eine Bohrung des Drehgelenks direkt mit einem Anschluss der ersten Baugruppe des Drehverteilers verbunden wird.

Erfindungsgemäß sind die Drehachsen der zwei oder mehr liegenden Drehgelenke im Wesentlichen parallel zur Maschinendrehachse angeordnet. Hier und im Folgenden wird davon ausgegangen, dass auch bei gewinkelten Drehgelenken nur ein Rohrsegment bezüglich des Drehgelenks drehbar ist, während das andere Rohrsegment fest mit dem Drehgelenk verbunden ist. Die vorliegende Erfindung kann jedoch auch auf Drehgelenke erweitert werden, bei denen beide Segmente drehbar angebunden sind. In diesem Fall ist wenigstens eine der beiden Drehachsen im Wesentlichen parallel zur Maschinendrehachse angeordnet.

Eine im Wesentlichen parallele Anordnung von Drehachse und Maschinendrehachse liegt vor, wenn zwischen Drehachse und Maschinendrehachse ein Winkel vorliegt, der maximal 5°, bevorzugt maximal 2°, besonders bevorzugt 0° innerhalb Fertigungstoleranzen beträgt.

Aufgrund der im Wesentlichen parallelen Anordnung der Drehachsen der zwei oder mehr Drehgelenke bezüglich der Maschinendrehachse werden diese Drehgelenke hier und im Folgenden als liegende Drehgelenke bezeichnet, da die Maschinendrehachse herkömmlicher Rundläufermaschinen im Allgemeinen senkrecht zur Aufstandsfläche der Maschine angeordnet ist. Im Gegensatz hierzu werden hier und im Folgenden solche Drehgelenke, deren Drehachse im Wesentlichen senkrecht zur Maschinendrehachse ausgerichtet ist, als vertikale Drehgelenke bezeichnet.

Das Vorsehen liegender Drehgelenke an den Zuführleitungen gestattet es, wie unten genauer beschrieben, die thermische Ausdehnung der Zuführleitungen von dem Drehverteiler und dem Ventilknoten zu entkoppeln. Dies reduziert einerseits die auftretenden Spannungen, vereinfacht andererseits jedoch auch den Aufbau der Anlage.

Gemäß einer Weiterbildung kann wenigstens eine Zuführleitung genau zwei liegende Drehgelenke aufweisen. Eine solche Zuführleitung kann insbesondere ausschließlich liegende Drehgelenke, d.h. keine vertikalen Drehgelenke, aufweisen. Es ist jedoch auch möglich, dass eine oder mehrere Zuführleitungen zusätzlich zu den liegenden Drehgelenken ein oder mehrere vertikale Drehgelenke aufweisen, deren jeweilige Drehachse senkrecht auf der Maschinendrehachse steht. Auch können eine oder mehrere Zuführleitungen mehr als zwei liegende Drehgelenke aufweisen. Je nach Aufhängung der Zuführleitung können vertikale Drehgelenke jedoch dazu führen, dass sich eine Senke am unteren vertikalen Drehgelenk bilden kann, in der Flüssigkeit zurückbleibt. Ist eine Höhenverstellbarkeit des Drehverteilers nicht erforderlich, so kann bevorzugt auf vertikale Drehgelenke verzichtet werden, um das Bilden einer solchen Senke zu vermeiden, da eine Anordnung mit ausschließlich liegenden Drehgelenken ein vertikales Absinken der Zuführleitung nicht zulässt, da die Freiheitsgrade der Drehgelenke nicht in diese Richtung reichen. Eine solche Anordnung ist damit einerseits hygienischer, andererseits jedoch auch kompakter. Zudem reduziert sich aufgrund der geringeren Zahl an Drehgelenken der Verschleiß.

Eine Weiterbildung mit genau zwei liegenden Drehgelenken ist besonders kompakt und einfach zu installieren.

Erfindungsgemäß weisen wenigstens zwei der zwei oder mehr liegenden Drehgelenke Drehachsen auf, die versetzt zueinander angeordnet sind. Dabei sind die Drehachsen dieser wenigstens zwei Drehgelenke senkrecht zueinander versetzt. Eine der Drehachsen kann dabei mit der Maschinendrehachse zusammenfallen.

Das Vorsehen von mindestens zwei liegenden Drehgelenken mit versetzten Drehachsen führt dazu, dass der zwischen diesen zwei Drehgelenken liegende Teil der Zuführleitung die Funktion einer Lenkstange erhält. Dadurch können die Längsausdehnungen der Rohrleitungen durch Temperaturschwankungen mittels Verschieben dieser Lenkstange von der Versorgungseinheit und dem Drehverteiler entkoppelt werden.

Erfindungsgemäß ist ein Segment der Zuführleitung zwischen den wenigstens zwei liegenden Drehgelenken S-förmig oder U-förmig ausgebildet oder umfasst ein S-förmiges Untersegment und/oder ein U-förmiges Untersegment. Der S-förmige bzw. U-förmige Teil der Zuführleitung fungiert dabei als Lenkstange, die eine relative Verschiebung der Teile der Zuführleitung, die an die liegenden Drehgelenke anschließen, die das Segment begrenzen, bzw. des anschließenden Drehverteilers ermöglicht.

Gemäß einer Weiterbildung kann wenigstens eines der zwei oder mehr liegenden Drehgelenke Segmente der Zuführleitung unter einem im Wesentlichen rechten Winkel verbinden. Auf diese Weise können Winkelsegmente der Rohrleitung eingespart werden, wodurch der Aufbau weiter vereinfacht werden kann.

Gemäß einer weiteren Weiterbildung kann ein weiteres der zwei oder mehr liegenden Drehgelenke die Zuführleitung mit einem Anschluss der ersten Baugruppe verbinden. Dabei kann der entsprechende Anschluss der ersten Baugruppe insbesondere derart angeordnet sein, dass die Drehachse des weiteren liegenden Drehgelenks mit der Maschinendrehachse zusammenfällt oder parallel zu dieser ist. Beispielsweise kann der Anschluss als Bohrung in einer Verteilerplatte des Drehverteilers vorgesehen sein, die an der oberen oder unteren Stirnseite des Drehverteilers angeordnet ist. Eine solche Anordnung ist insbesondere für die Zuführleitung für das Füllprodukt einer Füllmaschine von Vorteil.

Gemäß einer Weiterbildung kann die wenigstens eine Zuführleitung mit einem Anschluss der ersten Baugruppe für ein Reinigungsmittel für eine CIP-Reinigung verbunden sein. Beim CIP-Vorgang wird häufig heißes Reinigungsmittel über die Zuführleitung und den Drehverteiler zu den zu reinigenden Teilen der Bearbeitungsstationen geführt. Die Zuführleitung für das CIP-Reinigungsmittel unterliegt somit besonders großen Temperaturschwankungen. Longitudinale Ausdehnungen der Rohrleitungen beim CIP-Vorgang in der Größenordnung von 6 bis 10 mm sind dabei durchaus üblich. Die zuvor beschriebenen Weiterbildungen der Zuführleitung für das CIP-Reinigungsmittel mit zwei oder mehr liegenden Drehgelenken sind in der Lage, die beim CIP-Vorgang auftretenden Ausdehnungen aufzufangen, indem insbesondere die Winkelstellung des als Lenkstange fungierenden Zwischensegments der Zuführleitung durch die thermische Ausdehnung geändert wird. Auf diese Weise können die auftretenden Spannungen erheblich reduziert werden, was im Umkehrschluss die Anforderungen an die exakte Aufstellung des Drehverteilers und der Versorgungseinheit, beispielsweise des Ventilknotens, senkt.

Gemäß einer Weiterbildung können wenigstens zwei Zuführleitungen mit jeweils zwei oder mehr liegenden Drehgelenken vorgesehen sein, von denen eine erste Zuführleitung mittels eines liegenden Drehgelenks mit einem axial angeordneten Anschluss der ersten Baugruppe verbunden ist, und eine zweite Zuführleitung mit einem seitlich angeordneten Anschluss der ersten Baugruppe verbunden ist. Ein axial angeordneter Anschluss besitzt dabei eine Bohrung, deren Bohrachse parallel zur Maschinendrehachse angeordnet ist oder mit dieser zusammenfällt. Ein seitlich angeordneter Anschluss ist hingegen an einer Mantelseite des Drehverteilers angeordnet.

Bei einem axial angeordneten Anschluss ist die Anbindung der entsprechenden Zuführleitung unmittelbar über ein liegendes Drehgelenk möglich, wodurch der Anlagenaufbau weiter vereinfacht werden kann. Je nach Ausbildung des Drehverteilers, insbesondere der innerhalb des Drehverteilers angeordneten Kanäle, kann es jedoch erforderlich sein, mindestens eine Zuführleitung mit einem seitlich angeordneten Anschluss der ersten Baugruppe zu verbinden. In diesem Fall kann die Anbindung entweder starr, beispielsweise über eine Verschweißung oder einen Flansch, erfolgen oder über ein vertikales Drehgelenk. Die beschriebenen Weiterbildungen mit zwei oder mehr liegenden Drehgelenken können dabei vorteilhaft für all die Zuführleitungen eingesetzt werden, die während des Betriebs der Rundläufermaschine erheblichen Temperaturschwankungen unterliegen. Beispielsweise kann auch für das Füllprodukt eine solche Zuführleitung vorgesehen werden, wenn das Füllprodukt mit einer von der Umgebungstemperatur erheblich abweichenden Temperatur, beispielsweise gekühlt, abgefüllt werden soll. Es können jedoch auch Zuführleitungen vorgesehen sein, die nicht die oben beschriebenen zwei oder mehr liegenden Drehgelenke aufweisen.

Gemäß einer Weiterbildung kann wie oben bereits erwähnt die erste Baugruppe eine Verteilerwelle des Drehverteilers umfassen und die zweite Baugruppe einen Verteilerkopf des Drehverteilers umfassen, sodass der Verteilerkopf bezüglich der Verteilerwelle drehbar ausgebildet ist. Die Ausbildung von Verteilerwelle und Verteilerkopf kann dabei insbesondere wie in der Offenlegungsschrift DE 10 2014 109 082 A1 beschrieben erfolgen. Gemäß dieser Weiterbildung sind die eine oder mehrere Zuführleitungen für das wenigstens eine fluide Medium somit mit der Verteilerwelle verbunden, während im Verteilerkopf eine Vielzahl von Ausgangsöffnungen zum Abführen der fluiden Medien an Medienleitungen vorgesehen ist, die ihrerseits die Medien den einzelnen Bearbeitungsstationen zuführen. Dabei können wie an sich bekannt eine oder mehrere Ringkanäle als Teil des rotierenden Anlagenteils vorgesehen sein, die mit den entsprechenden Ausgangsöffnungen im Verteilerkopf verbunden sind.

Gemäß einer alternativen Weiterbildung kann wie oben ebenfalls erwähnt die erste Baugruppe einen Verteilerkopf des Drehverteilers umfassen und die zweite Baugruppe eine Verteilerwelle des Drehverteilers umfassen, sodass die Verteilerwelle bezüglich des Verteilerkopfes drehbar ausgebildet ist. Die Ausbildung von Verteilerwelle und Verteilerkopf kann dabei insbesondere wie in der Offenlegungsschrift DE 10 2015 118 671 A1 beschrieben erfolgen. Gemäß dieser Weiterbildung sind die eine oder mehrere Zuführleitungen für das wenigstens eine fluide Medium somit mit dem Verteilerkopf verbunden, während über entsprechende Ringkanäle zwischen Verteilerkopf und Verteilerwelle sowie entsprechende Ringkanäle und axiale Kanäle in der Verteilerwelle ein Weiterleiten der Medien an eine Vielzahl von Ausgangsöffnungen, die beispielsweise in einer Verteilerplatte vorgesehen sein können, erfolgt. Von den Ausgangsöffnungen sind entsprechende Medienleitungen zu den Bearbeitungsstationen bzw. zu zwischengeschalteten Ringkanälen vorgesehen.

Die vorliegende Erfindung stellt auch eine Füllmaschine zum Befüllen von Behältern mit einem Füllprodukt zur Verfügung, die einen stehenden Anlagenteil und einen gegenüber dem stehenden Anlagenteil rotierbaren Anlagenteil umfasst, an dem mindestens ein Füllventil zum Befüllen eines zu befüllenden Behälters mit dem Füllprodukt angeordnet ist, wobei die Füllmaschine weiterhin eine Vorrichtung nach einer der oben beschriebenen Weiterbildungen umfasst, wobei die erste Baugruppe an dem stehenden Anlagenteil angeordnet ist und die zweite Baugruppe an dem rotierbaren Anlagenteil angeordnet ist, und wobei das wenigstens eine fluide Medium das Füllprodukt umfasst.

Die Füllmaschine kann insbesondere wie bereits mehrfach erwähnt als Rundläufermaschine, beispielsweise in Form eines Füllerkarussells ausgebildet sein, bei dem eine Vielzahl von Füllorganen am Umfang des Füllerkarussells angeordnet ist. Der stehende Anlagenteil umfasst dabei den Teil der Füllmaschine, der nicht rotiert und beispielsweise auf einer Aufstellfläche steht. Der rotierbare Anlagenteil umfasst insbesondere das Füllerkarussell mit den umlaufenden Füllorganen und Behälteraufnahmen. Bei den Behältern kann es sich um Flaschen, Dosen oder dergleichen handeln. Bei dem Füllprodukt kann es sich insbesondere um ein Getränk handeln. Gemäß dieser Weiterbildung ist die erste Baugruppe an dem stehenden Anlagenteil angeordnet und insbesondere mit diesem mechanisch verbunden. Somit ist auch die erste Baugruppe nicht drehbar ausgebildet. Hingegen ist die zweite Baugruppe an dem rotierbaren Anlagenteil angeordnet und insbesondere mit diesem mechanisch verbunden. Somit ist auch die zweite Baugruppe drehbar ausgebildet und rotiert gemeinsam mit dem rotierbaren Anlagenteil. Das wenigstens eine fluide Medium umfasst gemäß dieser Weiterbildung das Füllprodukt, sodass wenigstens eine Zuführleitung gemäß den oben beschriebenen Weiterbildungen für das Füllprodukt vorgesehen sein kann.

Eine derart ausgebildete Füllmaschine ist wie bereits mehrfach erwähnt besonders einfach aufzustellen und aufgrund der speziellen Weiterbildung der Zuführleitungen besonders kompakt. Der Ausgleich auftretender thermischer Spannungen durch die liegenden Drehgelenke verhindert dabei einen Verteilerschaden, beispielsweise durch Bruch eines Lagers.

Gemäß einer speziellen Weiterbildung kann die erste Baugruppe fest mit dem stehenden Anlagenteil verbunden sein. Gemäß dieser Weiterbildung ist die erste Baugruppe somit nicht entlang der Maschinendrehachse verfahrbar. Eine solche Weiterbildung kann insbesondere bei Füllmaschinen ohne Höhenverstellung eingesetzt werden, wobei das Bilden einer Senke in der Zuführleitung wie oben beschrieben wirksam vermieden wird. Bei Füllmaschinen mit Höhenverstellung können jedoch zusätzlich zu den oben beschriebenen liegenden Drehgelenken auch vertikale Drehgelenke als Teil der Zuführleitungen vorgesehen werden, um eine Verfahrbarkeit der ersten Baugruppe und somit des Drehverteilers entlang der Maschinendrehachse zu ermöglichen.

Gemäß einer Weiterbildung kann die Füllmaschine weiterhin einen Ventilknoten zum Bereitstellen des wenigstens einen fluiden Mediums umfassen, wobei die eine oder mehreren Zuführleitungen den Ventilknoten mit dem Drehverteiler verbinden. Ventilknoten sind im Stand der Technik allgemein bekannt und werden dazu eingesetzt, vielfältige Medienlenkungen auf kleinem Raum in übersichtlicher Form zu realisieren. Die Steuerung der Ventile kann beispielsweise über einen pneumatischen Antrieb erfolgen. Von dem feststehenden Ventilknoten sind im Allgemeinen Versorgungsleitungen für die fluiden Medien zu entsprechenden Speichereinheiten, beispielsweise Vorratstanks, vorgesehen. Gemäß dieser Weiterbildung ist der Ventilknoten als Teil der Füllmaschine ausgebildet. Alternativ kann der Ventilknoten jedoch auch zur gemeinsamen Medienversorgung weiterer Anlagenteile, beispielsweise einer Blasformmaschine, vorgesehen sein. Dabei können Zuführleitungen gemäß den oben beschriebenen Weiterbildungen zu jedem der versorgten Anlagenteile mit einem Drehverteiler vorgesehen werden.

Gemäß einer Weiterbildung kann eine Zuführleitung für das Füllprodukt und wenigstens eine weitere Zuführleitung für wenigstens ein weiteres fluides Medium vorgesehen sein. Das Füllprodukt kann wie erwähnt ein Getränk sein. Die erste Zuführleitung für das Füllprodukt kann wie bereits beschrieben insbesondere mit einem axial angeordneten Anschluss der ersten Baugruppe verbunden sein. Die wenigstens eine zweite Zuführleitung für wenigstens ein weiteres fluides Medium kann wie bereits beschrieben insbesondere mit einem seitlich angeordneten Anschluss der ersten Baugruppe verbunden sein. Wenigstens eine zweite Zuführleitung kann jedoch auch mit einem weiteren axialen Anschluss der ersten Baugruppe verbunden sein. Die Anbindung der Zuführleitungen an entsprechende Anschlüsse der ersten Baugruppe kann dabei je nach Anforderung der Füllmaschine bzw. des Aufstellungsplanes erfolgen. Die beschriebenen Weiterbildungen sind besonders kompakt und haben nur geringe Anforderungen an die Vermeidung von Aufstellungsfehlern.

Das weitere fluide Medium kann ein Spülgas, ein Spanngas, ein Sterilisationsmittel, ein Reinigungsmittel oder Steuer-/Druckluft sein oder umfassen. Insbesondere kann für jedes fluide Medium wenigstens eine Zuführleitung gemäß den oben beschriebenen Weiterbildungen vorgesehen sein. Besonders vorteilhaft ist wie oben erwähnt eine derart ausgebildete Zuführleitung für ein CIP-Reinigungsmittel, aber auch Spanngase, wie beispielsweise Kohlendioxid, können aufgrund ihrer oft niedrigen Temperatur vorteilhaft durch eine der oben beschriebenen Zuführleitungen bereitgestellt werden.

Die beschriebenen Vorrichtungen und Füllmaschinen weisen eine Verrohrung auf, die mögliche auftretende Spannkräfte vom Drehverteiler entkoppeln. Des Weiteren werden weniger Fertigungsteile benötigt, was auch zu kürzeren Konstruktionszeiten führt. Zum anderen wird der Einbau erleichtert. Auch Fehler in der Fertigung oder beim Aufstellen des Ventilknotens können durch die bessere Beweglichkeit der Verrohrung ausgeglichen werden. Dadurch kann auf Nacharbeiten in der Montage weitestgehend verzichtet werden. Zudem besteht bei den beschriebenen Weiterbildungen keine Gefahr mehr, dass sich das Gefälle in den Zuführleitungen nicht optimal einstellen lässt und somit Leitungen durchhängen.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
Figur 1 zeigt schematisch eine dreidimensionale Ansicht eines Drehverteilers mit Zuführleitungen mit liegenden Drehgelenken gemäß der vorliegenden Erfindung.
Figur 2 zeigt grob schematisch eine Draufsicht auf eine Füllmaschine gemäß der vorliegenden Erfindung.

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

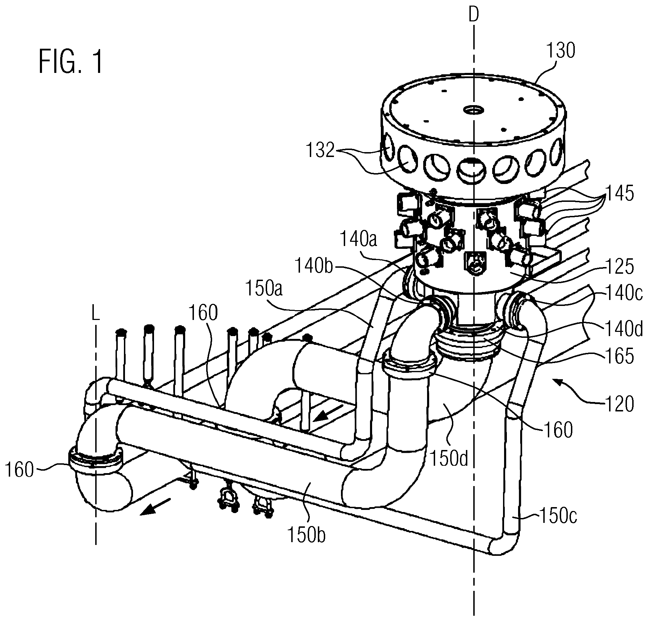

In der Figur 1 ist schematisch eine dreidimensionale Ansicht einer Vorrichtung zum Verteilen fluider Medien für eine Rundläufermaschine mit einem Drehverteiler und Zuführleitungen mit liegenden Drehgelenken gemäß der vorliegenden Erfindung dargestellt. Zur besseren Übersichtlichkeit sind in der Darstellung der Figur 1 für das Verständnis der vorliegenden Erfindung nicht wesentliche Teile, insbesondere die Rundläufermaschine selbst, weggelassen. Es versteht sich jedoch, dass das anhand der Figur 1 demonstrierte Prinzip der vorliegenden Erfindung durch an sich bekannte Abwandlungen des Drehverteilers selbst und dessen Anordnung bezüglich der Rundläufermaschine im Zusammenhang mit unterschiedlichsten Rundläufermaschinen zum Einsatz kommen kann.

Ohne Beschränkung der Allgemeinheit ist in der Figur 1 ein Drehverteiler 120 dargestellt, dessen erste, nicht drehbar ausgebildet Baugruppe 125 als Verteilerwelle ausgebildet ist, während die zweite, drehbar ausgebildete Baugruppe 130 als Verteilerkopf ausgebildet ist. Die erste Baugruppe 125 wäre somit mit einem stehenden Anlagenteil (nicht dargestellt) der Rundläufermaschine verbunden, während die zweite Baugruppe 130, beispielsweise über Medienleitungen (nicht dargestellt), die die Vielzahl von Auslassöffnungen 132 des Verteilerkopfes mit den Bearbeitungsstationen (nicht dargestellt) verbinden, mit dem rotierenden Anlagenteil der Rundläufermaschine verbunden wäre.

Die Maschinendrehachse D, um die sowohl der rotierende Anlagenteil der Rundläufermaschine als auch die drehbar ausgebildete zweite Baugruppe 130 rotiert, ist in der Figur 1 durch eine gestrichelte Linie dargestellt. Die Maschinendrehachse D steht im Allgemeinen senkrecht auf einer Aufstellfläche der Rundläufermaschine.

Der dargestellte Drehverteiler 120 ist zum Einsatz in einer Füllmaschine vorgesehen. Das Füllprodukt wird dabei über einen axialen Anschluss 140d in der unteren Stirnseite der ersten Baugruppe 125 über die Zuführleitung 150d zugeführt und anschließend nach Durchtritt durch entsprechende Innenkanäle des Drehverteilers 120 über die Auslassöffnungen 132 des Verteilerkopfes 130 an die Füllorgane der Füllmaschine weitergeleitet.

Über seitlich angeordnete Anschlüsse 140a-c der ersten Baugruppe 125 sind zudem Zuführleitungen 150a-c für weitere fluide Medien, beispielsweise eine CIP-Reinigungsflüssigkeit, aber auch Druckgase, Steuerluft oder Sterilisationsmittel, an den Drehverteiler angeschlossen. Schließlich zeigt die in der Figur 1 dargestellte, nicht limitierende Weiterbildung des Drehverteilers 120 eine Vielzahl weiterer seitlicher Anschlüsse 145 in der nicht drehbaren, ersten Baugruppe 125, über die dem Füllprodukt weitere Medien, wie beispielsweise zusätzliche Getränkekomponenten, Gase und dergleichen, zugeführt werden können. Die Vermischung dieser weiteren Medien mit dem Füllprodukt findet dabei in entsprechend ausgebildeten Kanälen des Drehverteilers statt.

Die in der Figur 1 exemplarisch dargestellten Zuführleitungen 150a-d können beispielsweise an einen Ventilknoten (nicht dargestellt) zur Bereitstellung der fluiden Medien angeflanscht werden. Ebenso sind die seitlichen Anschlüsse 140a-c mit den jeweiligen Zuführleitungen 150a-c über Flansche verbunden.

Von den hier exemplarisch dargestellten vier Zuführleitungen 150a-d sind die Zuführleitung 150b für das CIP-Reinigungsmittel und die Zuführleitung 150d für das Füllprodukt mit jeweils zwei liegenden Drehgelenken 160 bzw. 165 gemäß der vorliegenden Erfindung ausgebildet. Sowohl für das CIP-Reinigungsmittel als auch für das Füllprodukt können je nach Betriebszustand der Füllmaschine teils erhebliche Temperaturschwankungen auftreten. Beispielsweise kann die Temperatur des CIP-Reinigungsmittels bis zu 80 °C betragen. Im Gegensatz hierzu kann das Füllprodukt gekühlt, beispielsweise bei 4 °C, in die Behälter eingefüllt werden. In beiden Fällen weicht die Temperatur des jeweiligen Mediums in der jeweiligen Betriebsphase erheblich von der Umgebungstemperatur ab, sodass die jeweiligen Zuführleitungen sich entlang der durch Pfeile in der Figur 1 angedeuteten Schubrichtung um mehrere Millimeter bis Zentimeter ausdehnen.

Um die durch diese Ausdehnung auftretenden Spannungen abzufangen, sind die Zuführleitungen 150b und 150d mit zwei liegenden Drehgelenken 160 bzw. 165 ausgebildet, deren Drehachsen parallel zur Maschinendrehachse D ausgerichtet sind. Für das erste Drehgelenke 160 der Zuführleitung 150b ist die Drehachse L exemplarisch durch eine gestrichelte Linie dargestellt. Um diese Drehachse L sind somit die an das Drehgelenk 160 anschließenden Segmente der Zuführleitung 150b drehbar. In Kombination mit dem zweiten, stromabwärts angeordneten liegenden Drehgelenke 160 der Zuführleitung 150b wird gemäß der dargestellten Weiterbildung ein Mittelsegment der Zuführleitung zwischen den beiden Drehgelenken realisiert, das die Funktion einer Lenkstange aufweist.

Anders ausgedrückt kann durch die versetzte Anordnung der Drehachsen der beiden liegenden Drehgelenke das Mittelsegment zwischen den beiden Drehgelenken relativ zu dem Rest der Zuführleitung verkippt bzw. verschwenkt werden. Eine thermische Ausdehnung des in der Figur 1 gezeigten langen Teils der Zuführleitung 150b in Richtung des Pfeils dreht somit das Mittelsegment gegenüber den beiden Drehgelenken 160 und entkoppelt dadurch die Längsausdehnung des langen Teils der Zuführleitung von dem Anschluss 140b und dem Drehverteiler 120.

Die spezielle Weiterbildung der Zuführleitung 150b weist ein S-förmiges Mittelsegment zwischen den beiden liegenden Drehgelenken 160 auf. Darüber hinaus sind die an die beiden Drehgelenke angeschlossenen weiteren Segmente der Zuführleitung in dieselbe Richtung ausgerichtet. Die spezielle Weiterbildung ist jedoch nicht zwingend erforderlich für die Funktionalität der Lenkstange, sondern kann auch mit einem U-förmigen Mittelsegment oder komplexeren Formen erreicht werden.

Wie anhand der Zuführleitung 150d für das Füllprodukt in der Figur 1 demonstriert, ist auch die Ausrichtung der anschließenden Segmente der Zuführleitung in dieselbe Richtung nicht zwingend. Vielmehr ist das S-förmige Mittelsegment der Zuführleitung 150d mit dem einen Ende über ein liegendes Drehgelenk 160 an den langen Teil der Zuführleitung angeschlossen, während es mit seinem anderen Ende direkt über ein liegendes Drehgelenk 165 an den axialen Anschluss 140d der ersten Baugruppe 125 angeschlossen ist. Da auch hier die Drehachsen der beiden Drehgelenke 160 und 165 zueinander versetzt angeordnet sind, nimmt das Mittelsegment die Funktion einer Lenkstange war. Anders ausgedrückt verkippt eine Längsausdehnung des langen Teils der Zuführleitung 150d für das Füllprodukt in die durch den Pfeil angedeutete Schubrichtung das Mittelsegment durch gleichzeitige Drehung beider Drehgelenke 160 und 165 und nimmt dadurch die entstandene Schubspannung auf.

Die hier dargestellte Weiterbildung mit zwei Zuführleitungen mit genau zwei liegenden Drehgelenken ist nicht beschränkend, sondern lediglich illustrierend. Wie oben beschrieben können auch mehr als zwei Zuführleitungen nach einer der erfindungsgemäßen Weiterbildungen vorgesehen sein, wobei auch mehr als zwei liegenden Drehgelenke verwendet werden können. Darüber hinaus können zusätzlich vertikale Drehgelenke vorgesehen sein, um eine Höhenverstellbarkeit des Drehverteilers zu realisieren.

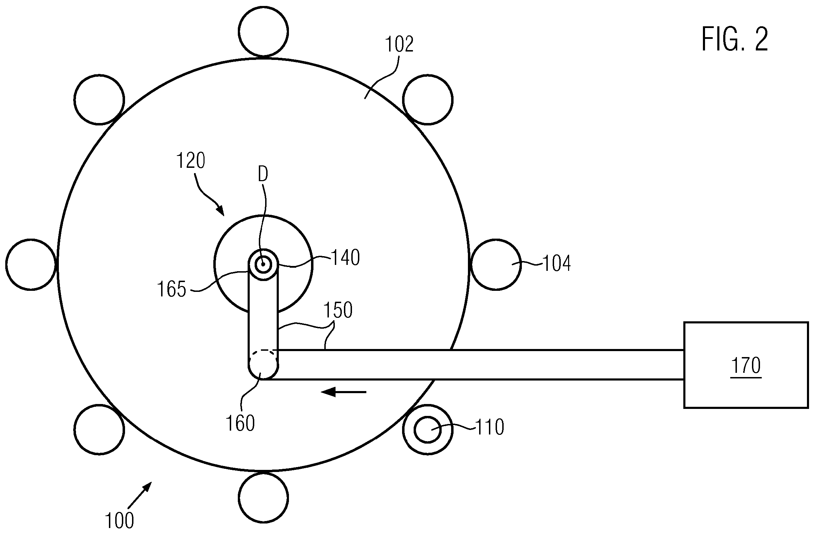

In der Figur 2 ist grob schematisch eine Draufsicht auf eine Füllmaschine gemäß der vorliegenden Erfindung dargestellt. Die Füllmaschine 100 weist einen um die Maschinendrehachse D drehbaren Träger 102 auf, an dem eine Vielzahl von Füllorganen 104 angeordnet ist, welche zum Befüllen von Behältern 110 dienen. Weiterhin weist die Füllmaschine Halteeinrichtungen auf, die die Behälter halten. Dabei werden die Behälter während ihres Transports befüllt.

Das Bezugszeichen 120 bezeichnet den bezüglich der Figur 1 beschriebenen Drehverteiler, der das Füllprodukt, beispielsweise ein Getränk, über (nicht dargestellte) Medienleitungen auf die einzelnen Füllorgane 104 verteilt. Dabei fallen die Drehachse des Drehverteilers 120 und die Maschinendrehachse D des Trägers 102 zusammen.

Von den Zuführleitungen für die fluiden Medien ist in der Figur 2 exemplarisch lediglich die Zuführleitung 150 für das Füllprodukt gezeigt. Die Zuführleitung 150 verbindet dabei einen obenliegenden, axialen Anschluss 140 des Drehverteilers 120 mit dem Ventilknoten 170, über den das Füllprodukt gesteuert zugeführt wird. Dabei ist die Zuführleitung 150 direkt über ein liegendes Drehgelenk 165 an den axialen Anschluss 140 angeschlossen. Zusätzlich weist die Zuführleitung 150 ein zweites liegendes Drehgelenk 160 auf, sodass das zwischen den beiden Drehgelenken 160 und 165 angeordnete Segment der Zuführleitung wie beschrieben die Funktion einer Lenkstange hat.

Eine Längsausdehnung des mit dem Ventilknoten 170 verbundenen Segments der Zuführleitung 150 führt somit zu einer Verschiebung in Pfeilrichtung, wodurch sich der Winkel zwischen dem langen und dem kurzen Segment der Zuführleitung 150 ändert. Die beiden liegenden Drehgelenke 160 und 165 entkoppeln dadurch die Längsausdehnung sowohl von dem Drehverteiler 120 als auch von dem Ventilknoten 170. Eventuell auftretende Spannkräfte werden somit aufgenommen.

Die beschriebenen Weiterbildungen führen über die Drehbarkeit der beiden liegenden Drehgelenke zu einer Entkopplung von Drehverteiler und Ventilknoten und einer geringen Kraftübertragung. Als Resultat können Schäden am Drehverteiler und am Ventilknoten vermieden werden. Ebenso vereinfacht sich der Aufbau, da eine exakte Positionierung des Ventilknotens bezüglich des Drehverteilers weniger bedeutsam ist. Des Weiteren ergibt sich eine gleichmäßigere Ausdehnung der Rohrleitungen. Schließlich sind die dargestellten Weiterbildungen mit nur zwei Drehgelenken besonders kompakt, was zu kürzeren Konstruktionszeiten führt.

## Patentansprüche

1. Vorrichtung zum Verteilen fluider Medien für eine Rundläufermaschine (100), insbesondere eine Füllmaschine (100), umfassend:
einen Drehverteiler (120) mit einer nicht drehbar ausgebildeten ersten Baugruppe (125) und einer um eine Maschinendrehachse drehbar ausgebildeten zweiten Baugruppe (130),
wobei die erste Baugruppe einen oder mehrere Anschlüsse (140a-d, 140, 145) für wenigstens ein fluides Medium aufweist, und
eine oder mehrere Zuführleitungen (150a-d, 150) für das wenigstens eine fluide Medium, die mit dem oder den Anschlüssen verbunden sind,
**dadurch gekennzeichnet, dass**
wenigstens eine Zuführleitung (150b, 150d, 150) zwei oder mehr liegende Drehgelenke (160, 165) aufweist, deren Drehachsen im Wesentlichen parallel zur Maschinendrehachse angeordnet sind, wobei wenigstens zwei der zwei oder mehr liegenden Drehgelenke (160, 165) Drehachsen aufweisen, die versetzt zueinander angeordnet sind, wobei ein Innenteil des Drehgelenks drehbar innerhalb eines Außenteils des Drehgelenks gelagert ist und wobei ein Segment der Zuführleitung (150b, 150d, 150) zwischen den wenigstens zwei liegenden Drehgelenken (160, 165) S-förmig oder U-förmig ausgebildet ist oder ein S-förmiges Untersegment und/oder ein U-förmiges Untersegment umfasst.

2. Vorrichtung nach Anspruch 1, wobei die wenigstens eine Zuführleitung (150b, 150d, 150) genau zwei liegende Drehgelenke (160, 165) aufweist.

3. Vorrichtung nach einem der vorhergehenden Ansprüche, wobei wenigstens eines der zwei oder mehr liegenden Drehgelenke (160) Segmente der Zuführleitung (150b, 150d, 150) unter einem im Wesentlichen rechten Winkel verbindet.

4. Vorrichtung nach Anspruch 3, wobei ein weiteres der zwei oder mehr liegenden Drehgelenke (165) die Zuführleitung (150d, 150) mit einem Anschluss (140d, 140) der ersten Baugruppe (125) verbindet.

5. Vorrichtung nach einem der vorhergehenden Ansprüche, wobei die wenigstens eine Zuführleitung (150b) mit einem Anschluss (140b) der ersten Baugruppe (125) für ein Reinigungsmittel für eine CIP-Reinigung verbunden ist.

6. Vorrichtung nach einem der vorhergehenden Ansprüche, wobei wenigstens zwei Zuführleitungen (150b, 150d, 150) mit jeweils zwei oder mehr liegenden Drehgelenken (160, 165) vorgesehen sind, von denen eine erste Zuführleitung (150d, 150) mittels eines liegenden Drehgelenks (165) mit einem axial angeordneten Anschluss (140d, 140) der ersten Baugruppe (125) verbunden ist, und eine zweite Zuführleitung (150b) mit einem seitlich angeordneten Anschluss (140b) der ersten Baugruppe (125) verbunden ist.

7. Vorrichtung nach einem der vorhergehenden Ansprüche, wobei die erste Baugruppe (125) eine Verteilerwelle des Drehverteilers (120) umfasst und die zweite Baugruppe (130) einen Verteilerkopf des Drehverteilers (120) umfasst, sodass der Verteilerkopf bezüglich der Verteilerwelle drehbar ausgebildet ist.

8. Vorrichtung nach einem der Ansprüche 1 bis 6, wobei die erste Baugruppe einen Verteilerkopf des Drehverteilers umfasst und die zweite Baugruppe eine Verteilerwelle des Drehverteilers umfasst, sodass die Verteilerwelle bezüglich des Verteilerkopfes drehbar ausgebildet ist.

9. Füllmaschine (100) zum Befüllen von Behältern (110) mit einem Füllprodukt, umfassend einen stehenden Anlagenteil und einen gegenüber dem stehenden Anlagenteil rotierbaren Anlagenteil (102), an dem mindestens ein Füllventil (104) zum Befüllen eines zu befüllenden Behälters (110) mit dem Füllprodukt angeordnet ist, und weiterhin eine Vorrichtung nach einem der vorhergehenden Ansprüche umfassend, wobei die erste Baugruppe (125) an dem stehenden Anlagenteil angeordnet ist und die zweite Baugruppe (130) an dem rotierbaren Anlagenteil angeordnet ist, und wobei das wenigstens eine fluide Medium das Füllprodukt umfasst.

10. Füllmaschine nach Anspruch 9, wobei die erste Baugruppe (125) fest mit dem stehenden Anlagenteil verbunden ist.

11. Füllmaschine nach Anspruch 9 oder 10, weiterhin einen Ventilknoten (170) zum Bereitstellen des wenigstens einen fluiden Mediums umfassend, wobei die eine oder mehreren Zuführleitungen (150a-d, 150) den Ventilknoten mit dem Drehverteiler (120) verbinden.

12. Füllmaschine nach einem der Ansprüche 9 bis 11, wobei eine Zuführleitung (150d, 150) für das Füllprodukt und wenigstens eine weitere Zuführleitung (150a-c) für wenigstens ein weiteres fluides Medium vorgesehen sind.

13. Füllmaschine nach Anspruch 12, wobei das weitere fluide Medium ein Spülgas, ein Spanngas, ein Sterilisationsmittel, ein Reinigungsmittel oder Steuer-/Druckluft ist oder umfasst.

## Claims

1. Device for distributing fluid media for a rotary machine (100), in particular a filling machine (100), comprising:
a rotary distributor (120) with a first assembly (125) designed to be non-rotatable and a second assembly (130) designed to be rotatable about a machine axis of rotation,
wherein the first assembly has one or more connections (140a-d, 140, 145) for at least one fluid medium, and
one or more supply lines (150a-d, 150) for the at least one fluid medium, which are connected to the connection or connections,
**characterized in that**
at least one supply line (150b, 150d, 150) has two or more horizontal pivot joints (160, 165) whose axes of rotation are arranged substantially parallel to the machine axis of rotation,
wherein at least two of the two or more horizontal pivot joints (160, 165) have axes of rotation that are offset relative to each other, wherein an inner part of the pivot joint is rotatably mounted within an outer part of the pivot joint, and wherein a segment of the supply line (150b, 150d, 150) between the at least two horizontal pivot joints (160, 165) is S-shaped or U-shaped or comprises an S-shaped sub-segment and/or a U-shaped sub-segment.

2. Device according to claim 1, wherein the at least one supply line (150b, 150d, 150) has exactly two horizontal pivot joints (160, 165).

3. Device according to one of the preceding claims, wherein at least one of the two or more horizontal swivel joints (160) connects segments of the supply line (150b, 150d, 150) at a substantially right angle.

4. Device according to claim 3, wherein another of the two or more horizontal pivot joints (165) connects the supply line (150d, 150) to a connection (140d, 140) of the first assembly (125).

5. Device according to one of the preceding claims, wherein the at least one supply line (150b) is connected to a connection (140b) of the first assembly (125) for a cleaning agent for CIP cleaning.

6. Device according to one of the preceding claims, wherein at least two supply lines (150b, 150d, 150) are provided, each with two or more horizontal pivot joints (160, 165), of which a first supply line (150d, 150) is connected by means of a horizontal pivot joint (165) to an axially arranged connection (140d, 140) of the first assembly (125), and a second supply line (150b) is connected to a laterally arranged connection (140b) of the first assembly (125).

7. Device according to one of the preceding claims, wherein the first assembly (125) comprises a distributor shaft of the rotary distributor (120) and the second assembly (130) comprises a distributor head of the rotary distributor (120), such that the distributor head is rotatable relative to the distributor shaft.

8. Device according to one of claims 1 to 6, wherein the first assembly comprises a distributor head of the rotary distributor and the second assembly comprises a distributor shaft of the rotary distributor, such that the distributor shaft is rotatable relative to the distributor head.

9. Filling machine (100) for filling containers (110) with a filling product, comprising a stationary plant part and a plant part (102) rotatable relative to the stationary plant part, on which at least one filling valve (104) for filling a container to be filled (110) with the filling product, and further comprising a device according to one of the preceding claims, wherein the first assembly (125) is arranged on the stationary plant part and the second assembly (130) is arranged on the rotatable plant part, and wherein the at least one fluid medium comprises the filling product.

10. Filling machine according to claim 9, wherein the first assembly (125) is fixedly connected to the stationary plant part.

11. Filling machine according to claim 9 or 10, further comprising a valve node (170) for supplying the at least one fluid medium, wherein the one or more supply lines (150a-d, 150) connect the valve node to the rotary distributor (120).

12. Filling machine according to any one of claims 9 to 11, wherein a supply line (150d, 150) is provided for the filling product and at least one further supply line (150a-c) is provided for at least one further fluid medium.

13. Filling machine according to claim 12, wherein the further fluid medium is or comprises a flushing gas, a tensioning gas, a sterilizing agent, a cleaning agent, or control/compressed air.

## Revendications

1. Dispositif de distribution de milieux fluides pour une machine rotative (100), en particulier une machine de remplissage (100), comprenant :
un distributeur rotatif (120) avec un premier module (125) non rotatif et un second module (130) rotatif autour d'un axe de rotation de machine,
dans lequel le premier module présente un ou plusieurs raccord(s) (140a à d, 140, 145) pour au moins un milieu fluide, et
une ou plusieurs conduite(s) d'alimentation (150a à d ; 150) pour le au moins un milieu fluide, qui est/sont reliée(s) au raccord ou aux raccords,
**caractérisé en ce que**
au moins une conduite d'alimentation (150b, 150d, 150) présente deux ou plus de deux articulations rotatives (160, 165) horizontales dont les axes de rotation sont agencés de manière essentiellement parallèle à l'axe de rotation de machine, dans lequel au moins deux des deux ou plus de deux articulations rotatives (160, 165) horizontales présentent des axes de rotation qui sont agencés de manière décalée les uns par rapport aux autres, dans lequel une partie intérieure de l'articulation rotative est montée de manière à pouvoir tourner à l'intérieur d'une partie extérieure de l'articulation rotative et dans lequel un segment de la conduite d'alimentation (150b, 150d, 150) est réalisé en forme de S ou en forme de U entre les au moins deux articulations rotatives (160, 165) horizontales ou comprend un sous-segment en forme de S et/ou un sous-segment en forme de U.

2. Dispositif selon la revendication 1, dans lequel la au moins une conduite d'alimentation (150b, 150d, 150) présente exactement deux articulations rotatives (160, 165) horizontales.

3. Dispositif selon l'une quelconque des revendications précédentes, dans lequel au moins une des deux ou plus de deux articulations rotatives (160) horizontales relie des segments de la conduite d'alimentation (150b, 150d, 150) selon un angle essentiellement droit.

4. Dispositif selon la revendication 3, dans lequel une autre des deux ou plus de deux articulations rotatives (165) horizontales relie la conduite d'alimentation (150d, 150) à un raccord (140d, 140) du premier module (125).

5. Dispositif selon l'une quelconque des revendications précédentes, dans lequel la au moins une conduite d'alimentation (150b) est reliée à un raccord (140b) du premier module (125) pour un agent de nettoyage en vue d'un nettoyage NEP.

6. Dispositif selon l'une quelconque des revendications précédentes, dans lequel au moins deux conduites d'alimentation (150b, 150d, 150) sont fournies avec respectivement deux ou plus de deux articulations rotatives (160, 165) horizontales, parmi lesquelles une première conduite d'alimentation (150d, 150) est reliée, au moyen d'une articulation rotative (165) horizontale, à un raccord (140d, 140), agencé de manière axiale, du premier module (125), et une seconde conduite d'alimentation (150b) est reliée à un raccord (140b), agencé de manière latérale, du premier module (125).

7. Dispositif selon l'une quelconque des revendications précédentes, dans lequel le premier module (125) comprend un arbre de distributeur du distributeur rotatif (120) et le second module (130) comprend une tête de distributeur du distributeur rotatif (120) de sorte que la tête de distributeur est rotative par rapport à l'arbre de distributeur.

8. Dispositif selon l'une quelconque des revendications 1 à 6, dans lequel le premier module comprend une tête de distributeur du distributeur rotatif et le second module comprend un arbre de distributeur du distributeur rotatif, de sorte que l'arbre de distributeur est rotatif par rapport à la tête de distributeur.

9. Machine de remplissage (100) permettant de remplir des récipients (110) avec un produit de remplissage, comprenant une partie installation fixe et une partie installation (102) rotative par rapport à la partie installation fixe et au niveau de laquelle est agencée au moins une soupape de remplissage (104) permettant de remplir un récipient (110) à remplir avec le produit de remplissage, et comprenant en outre un dispositif selon l'une quelconque des revendications précédentes, dans laquelle le premier module (125) est agencé au niveau de la partie installation fixe et le second module (130) est agencé au niveau de la partie installation rotative, et dans laquelle le au moins un milieu fluide comprend le produit de remplissage.

10. Machine de remplissage selon la revendication 9, dans laquelle le premier module (125) est relié de manière fixe à la partie installation fixe.

11. Machine de remplissage selon la revendication 9 ou 10, comprenant en outre un collecteur de soupapes (170) permettant de fournir le au moins un milieu fluide, dans laquelle la ou les conduite(s) d'alimentation (150a à d, 150) relie(nt) le collecteur de soupapes au distributeur rotatif (120).

12. Machine de remplissage selon l'une quelconque des revendications 9 à 11, dans laquelle une conduite d'alimentation (150d, 150) est prévue pour le produit de remplissage et au moins une autre conduite d'alimentation (150a à c) est prévue pour au moins un autre milieu fluide.

13. Machine de remplissage selon la revendication 12, dans laquelle l'autre milieu fluide est ou comprend un gaz de purge, un gaz de tension, un agent de stérilisation, un produit de nettoyage, ou de l'air de commande/de l'air comprimé.
